Europäisches Patentamt

European Patent Office

Office européen des brevets

(19)

(11) Numéro de publication : **0 044 788**
**B1**

(12)

# FASCICULE DE BREVET EUROPÉEN

(45) Date de publication du fascicule du brevet :
25.07.84

(51) Int. Cl.³ : **C 03 B 29/04**

(21) Numéro de dépôt : **81401147.4**

(22) Date de dépôt : **20.07.81**

(54) Four pour le chauffage de feuilles de verre suspendues en position verticale.

(30) Priorité : **21.07.80 FR 8016000**

(43) Date de publication de la demande :
**27.01.82 Bulletin 82/04**

(45) Mention de la délivrance du brevet :
**25.07.84 Bulletin 84/30**

(84) Etats contractants désignés :
**BE DE GB IT LU NL SE**

(56) Documents cités :
**FR-A- 2 237 854**
**US-A- 2 875 994**

(73) Titulaire : **SAINT-GOBAIN VITRAGE**
**Les Miroirs 18, avenue d'Alsace**
**F-92400 Courbevoie (FR)**
**BE GB IT LU NL SE**
**VEGLA Vereinigte Glaswerke GmbH**
**Viktoria Allee 3-5**
**D-5100 Aachen (DE)**
**DE**

(72) Inventeur : **Roth, Mario**
**Laurentiusstrasse 13**
**D-5100 Aachen (DE)**
Inventeur : **Bartusel, Karl-Rudolf**
**An der Waldmeisterhütte 9**
**D-5190 Stolberg (DE)**
Inventeur : **Pagel, Werner**
**Christian-Derichsstrasse 4**
**D-5120 Herzogenrath (DE)**
Inventeur : **Basten, Rolf**
**Bürgstüttgen 23**
**D-5190 Stolberg (DE)**
Inventeur : **Schamberg, Walter**
**Hahnstrasse 11**
**D-5120 Herzogenrath (DE)**
Inventeur : **Willems, Josef**
**Kellersberger Strasse 6**
**D-5110 Alsdorf-Hoengen (DE)**

(74) Mandataire : **Eudes, Marcel et al**
**Saint-Gobain Recherche 39 Quai Lucien Lefranc**
**F-93304 Aubervilliers Cedex (FR)**

## Description

L'invention concerne le réchauffage de feuilles de verre suspendues à des pinces d'accrochage. Les fours utilisés pour cette opération comportent des parois isolantes en matériaux céramiques réfractaires dans lesquelles les organes chauffants sont suspendus au parement intérieur des blocs isolants ou incorporés à ce dernier. Sous la zone chauffante existe une zone non chauffée destinée à recueillir les feuilles de verre tombant accidentellement des pinces et munie d'une ouverture pour en évacuer les débris.

Un four de ce type est décrit dans le brevet SUA-278 978. Il comprend une cellule chauffante reliée à une chambre située au-desous par une fente ménagée à travers une sole en matériau isolant céramique. Les parois latérales de la cellule du four sont munies de résistances chauffantes sur toute leur hauteur jusqu'à la sole. La sole porte également, jusqu'à la fente de communication avec la chambre inférieure, des résistances chauffantes et celles-ci sont protégées par des écrans contre les chocs et les détériorations provoquées par les chutes de verre accidentelles.

La chambre inférieure, dont la hauteur n'est qu'une petite fraction de celle de la cellule chauffée renferme des chariots mobiles où tombent les morceaux de verre ; pour les vider, on extrait ces chariots du four par des ouvertures ménagées sur les pignons du four.

Dans de tels fours, un risque subsiste que les feuilles de verre, pendant ou après leur chute, viennent au contact des éléments chauffants ou des parois rayonnantes et provoquent des détériorations. On n'a pas non plus la garantie que ces feuilles, après leur chute, s'évacuent entièrement vers la chambre non chauffée, à travers la fente de la sole. Il peut donc arriver que des morceaux de verre débordent dans la cellule chauffante où ils perturberont le chauffage de la feuille de verre suivante, ce qui est particulièrement gênant dans les fours à réglage automatique de température et tout spécialement si ceci vient à fausser les mesures de température.

Les manipulations compliquées qui sont nécessaires pour évacuer les chariots de calcin par les ouvertures dans la paroi frontale du four constituent une autre cause de perturbation dans le régime de température du four. En particulier dans des fours tranversants longs ou à plusieurs cellules, où plusieurs chariots à calcin doivent être placés à la file, le vidage de ces chariots est difficile et exige un temps important.

Un four du même type, avec des éléments chauffants le long des parois latérales, dans lequel les feuilles de verre ne sont plus suspendues à des pinces mais se déplacent en position sensiblement verticale en appui sur une rangée de rouleaux presque verticaux, posées de champ sur un chariot mobile sur des rouleaux montés transversalement au-dessus d'une sole ayant un versant incliné, est également connu par la publication de brevet FR-A-2 237 854. D'après ce document les éléments chauffants sont des résistances électriques réparties sur toute la hauteur des parois latérales, en saillie par rapport à ces parois, risquant donc ainsi d'être détériorées en cas de bris et chute accidentels des feuilles de verre. Une portion seulement de la largeur de la sole du four est inclinée vers le bas pour diriger les éventuels morceaux de verre vers des trappes de visite pratiquées dans la base de la paroi latérale du four, l'autre portion de sole étant horizontale et formant un palier, plus difficile d'accès à partir des trappes, sur lequel risquent de séjourner des morceaux de verre brisé.

L'invention vise à éviter les inconvénients rencontrés dans les fours de l'art antérieur, à savoir risque de détérioration des organes électriques chauffants ou des parois rayonnantes, perturbation du régime thermique, difficulté d'évacuation des morceaux de verre, lors du bris accidentel de feuilles de verre.

Pour cela elle propose de prolonger vers le bas la zone chauffée par une zone non chauffée, donc exempte d'organes chauffants, sur une hauteur au moins égale à la moitié de ladite zone chauffée et sensiblement égale à la hauteur des feuilles de verre et de donner à la totalité de la sole une pente en direction de l'ouverture pour l'évacuation des débris, cette ouverture étant placée sur un des côtés longitudinaux du four et fermée par des portes à ouverture directe.

La hauteur des feuilles de verre considérée est la plus grande dimension des feuilles de verre dans la direction verticale, lorsqu'elles sont accrochées aux pinces et qu'elles traversent le four.

De cette manière, les feuilles de verre brisées tombent assez bas pour ne plus pouvoir provoquer de détérioration mécanique des organes chauffants ou des parois isolantes même en basculant et en cognant contre les parois latérales après avoir atteint le fond. D'autre part, les feuilles de verre tombées se trouvent entièrement au-dessous du niveau de la zone chauffante si bien qu'elles ne perturbent aucunement le régime de température de la partie active du four ni des feuilles de verre en cours de traitement.

De préférence, la zone non chauffée communique avec chaque cellule chauffante sur toute la largeur. En d'autres termes, le four ne possède aucun ressaut ou aucune saillie réduisant à une fente de communication le passage d'une cellule chauffante à une chambre non chauffée. Au contraire, les parois latérales de la zone non chauffée prolongent directement celles de la zone chauffante. Elles ne sont cependant pas obligatoirement dans le prolongement de ces dernières mais peuvent être situées dans un plan parallèle, ce qui signifie que la zone non chauffée peut être plus large que la zone de chauffage ou, à condition que le passage soit progressif, plus étroite.

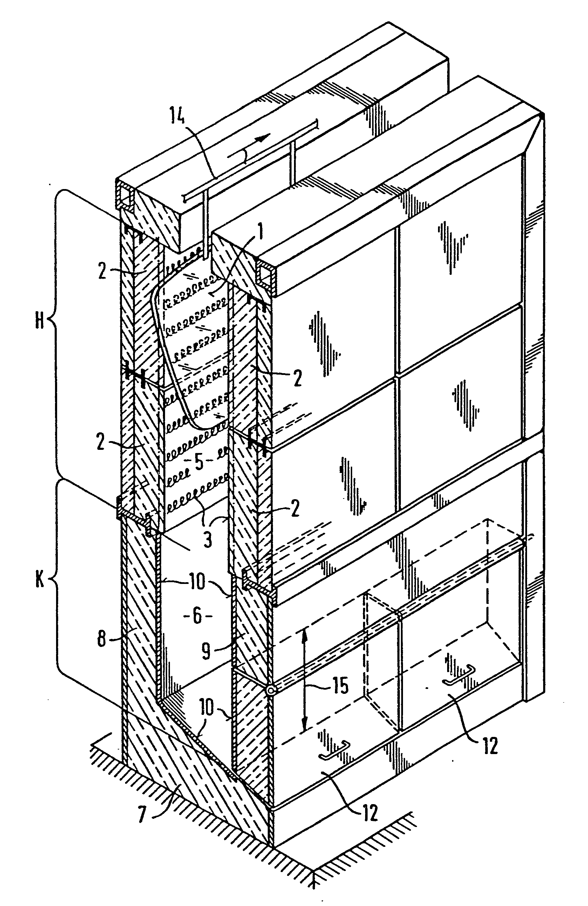

L'invention sera décrite de façon plus détaillée au moyen de la figure. Celle-ci montre une vue perspective partielle d'un four de trempe correspondant à une version préférée de l'invention.

Le four représenté est un four de trempe à plusieurs cellules dans lequel des feuilles de verre 1 sont acheminées horizontalement pas à pas, à travers les différentes cellules, par un système de suspension et de transport schématiquement représenté en 14.

Dans une zone supérieure de hauteur H, les parois des cellules sont constituées, de manière connue en soi, de blocs isolants 2 sur la face intérieure desquels sont disposées des résistances électriques 3, suspendues comme montré sur la figure ou encore incorporés dans les blocs isolants.

La zone chauffante 5 ainsi formée a une hauteur H au moins égale à la dimension verticale maximale des feuilles à traiter.

Pour constituer les parois chauffantes, on peut avantageusement utiliser des éléments ou modules de chauffage préfabriqués qui sont constitués de plaques de fibres céramiques dans lesquelles sont incorporées les résistances électriques.

De tels modules en matériau fibreux ont une masse spécifique très faible de 200 kg/m³ seulement et un très grand pouvoir isolant, mais aussi une très faible inertie thermique et par conséquent des temps de chauffage ou de refroidissement très courts. Ils sont donc particulièrement adaptés à la fabrication de fours dotés d'un système de régulation à réponse rapide.

Mais de tels fours sont sensibles aux perturbations comme celles qui peuvent se produire en cas de chute d'une feuille de verre dans le four et, sans s'y limiter, la présente invention leur est particulièrement adaptée.

Les parois équipées d'organes chauffants de la zone chauffante 5 sont prolongées vers le bas par des parois 8 et 9, en matériau réfractaire revêtu intérieurement d'une tôle 10 de métal réfractaire, exempte d'organes chauffants. Une chambre non chauffée 6 est ainsi constituée sous la zone chauffante 5.

La sole 7 du four est constituée des mêmes matériaux que les parois de la chambre non chauffée 6, à savoir matériau réfractaire recouvert par une tôle 10.

Au voisinage de la sole 7, la paroi 9 est munie d'une ouverture continue 15 que des portes rabattables accolées 12 permettent d'obturer. A travers ces portes, on peut enlever les débris des feuilles tombées sur la sole de la chambre 6.

Pour faciliter encore cette opération, la sole 7 est inclinée en direction des portes 12. La hauteur K de la chambre 6 est d'environ les deux tiers de la hauteur H de la cellule chauffante.

Pour éviter que les débris de verre ne stagnent dans le four et ne perturbent son fonctionnement, aucun ressaut, aucune saillie n'existent dans le four et en particulier la chambre 6 est soit plus large que la chambre chauffée 5, soit de même largeur avec des parois dans le prolongement les unes des autres, soit moins large mais avec des plans inclinés pour passer des parois de la chambre 5 à celles de la chambre 6.

## Revendications

1. Four pour le chauffage de feuilles de verre (1) suspendues à des pinces d'accrochage, comportant des parois isolantes porteuses d'organes chauffants et une zone inférieure non chauffée destinée à recueillir les débris des feuilles (1) tombant des pinces d'accrochage, zone limitée inférieurement par une sole et munie d'une ouverture pour en évacuer les débris, caractérisé en ce que la zone non chauffée (6) prolonge la zone chauffante (5) sur une hauteur K au moins égale à la moitié de la hauteur H de cette dernière, et sensiblement égale à la hauteur des feuilles de verre (1), et en ce que la totalité de la sole (7) présente une pente en direction de l'ouverture pour l'évacuation des débris, cette ouverture étant placée sur un des côtés longitudinaux du four et fermée par des portes à ouverture directe (12).

2. Four selon la revendication 1, caractérisé en ce que l'ouverture latérale s'étend sur toute la longueur du four et que ses portes (12) sont jointives, basculantes et ouvrent vers l'extérieur.

3. Four selon l'une des revendications 1 ou 2, caractérisé en ce que les parois de la zone non chauffée (6) sont constituées d'une tôle (10) en métal réfractaire.

## Claims

1. A furnace for heating glass sheets (1) suspended from holding clamps, comprising insulating walls carrying heating members and a lower zone which is not heated intented to recover fragments of the sheets (1) falling from the holding clamps, the zone being defined at its lower end by a bottom and provided with an opening for removing fragments, characterised in that the zone which is not heated (6) extends the heated zone (5) by a height K of at least half the height H of the latter, and substantially equal to the height of the glass sheets (1), and in that the whole of the bottom (7) has a gradient in the direction of the opening for removing fragments, this opening being positioned on one of the longitudinal sides of the furnace and closed by doors (12) opening directly into the furnace.

2. A furnace according to claim 1, characterised in that the lateral opening extends along the whole length of the furnace and its doors (12) are contiguous, tilting and open towards the exterior.

3. A furnace according to one of claims 1 and 2, characterised in that the walls of the zone which is not heated (6) are formed of a sheet (10) of refractory metal.

## Ansprüche

1. Ofen zum Erwärmen von an Greifzangen hängenden Glasscheiben, mit isolierenden, mit Heizorganen versehenen Wänden und einer unteren unbeheizten Zone zum Aufnehmen der Bruchstücke von aus den Greifzangen herausgefallenen Glasscheiben, wobei diese Zone unten durch einen Boden begrenzt und mit einer Öffnung zum Entfernen der Glasbruchstücke versehen ist, dadurch gekennzeichnet, daß die unbeheizte Zone (6) die beheizte Zone (5) um eine Höhe K verlängert, die wenigstens der halben Höhe H der letzteren und im wesentlichen der Höhe der Glasscheiben (1) entspricht, und daß der gesamte Boden (17) eine Neigung in Richtung der Öffnung zum Entfernen der Glasbruchstücke aufweist, wobei diese Öffnung auf einer der Längsseiten des Ofens angeordnet und durch direkt zu öffnende Türen (12) verschlossen ist.

2. Ofen nach Anspruch 1, dadurch gekennzeichnet, daß die seitliche Öffnung sich über die gesamte Länge des Ofens erstreckt und daß die Türen (12) aneinander anschließende nach außen zu öffnende Klapptüren sind.

3. Ofen nach einem der Ansprüche 1 oder 2, dadurch gekennzeichnet, daß die Wände der unbeheizten Zone (6) aus Blech (10) aus hitzebeständigem Metall bestehen.